# EUROPÄISCHE PATENTSCHRIFT

(11) **EP 1 457 726 B1**
(45) Veröffentlichungstag und Bekanntmachung des Hinweises auf die Patenterteilung: **02.11.2005**
(21) Anmeldenummer: 04003997.6
(22) Anmeldetag: 23.02.2004
(51) Int. Cl.: F16L 33/26

(54) **Verfahren zur Herstellung einer Verbindung zwischen einem Wellrohr und einem Anschlussstück**
Method for establishing a connection between a corrugated pipe and a fitting
Procédé d'établissement de liaison entre un tuyau ondulé et un raccord

(30) Priorität: 13.03.2003 DE 10310938
(43) Veröffentlichungstag der Anmeldung: 15.09.2004
(73) Patentinhaber: BRUGG Rohr AG, Holding, 5200 Brugg (CH)
(72) Erfinder: Homann, Jörn, Dipl.-Ing., 30655 Hannover (DE)

(56) Entgegenhaltungen:
- EP-A- 0 775 865
- FR-A- 2 641 842

## Beschreibung

Die Erfindung betrifft ein Verfahren zur Herstellung einer Verbindung zwischen dem Ende eines schraubenlinienförmig gewellten Metallrohres und einem Anschlußstück.

Zur Herstellung einer Verbindung von Metallrohren miteinander bzw. einer Verbindung zwischen einem Metallrohr und einem Anschlußstück gibt es mannigfaltige Lösungen. So ist es üblich, die genannten Bauteile miteinander zu verlöten oder zu verschweißen bzw. zu verschrauben.

Problematisch ist die Herstellung einer Verbindung von dünnwandigen Metallrohren miteinander bzw. mit einem Anschlußstück, da ein Verschrauben oder Verschweißen wegen der geringen Wanddicke nur schwer durchführbar ist, und ein Verlöten nur bei wenigen Metallen sinnvoll ist.

Noch komplizierter gestaltet sich der Anschluß eines schraubenlinienförmig gewellten dünnwandigen Metallrohres an ein Anschlußstück.

Aus der CH-PS 589 249 ist es bekannt, das Ende eines gewellten Metallrohres gegen die Innenfläche eines Flansches zu walzen, wobei die Wellung eingeebnet wird. Durch den beim Walzen anstehenden hohen Anpreßdruck entsteht zwischen dem ehemals gewellten Metallrohr und dem Metallflansch eine dichte Preßverbindung. Diese Art der Verbindung erfordert einen hohen apparativen Aufwand an der Montagestelle und setzt dickwandige Formteile voraus.

Eine andere Verbindungsart für gewellte Metallrohre ist in der DE-PS 33 02 450 beschrieben. Auf das Ende eines gewellten Rohres wird eine Stützbuchse geschraubt, und ein Rohrstutzen in das Ende des gewellten Rohres geschraubt. Die Abdichtung ergibt sich dadurch, daß die lichte Weite der Stützbuchse zum Ende hin zunimmt und/oder der Außendurchmesser des Rohrstutzens zum Ende hin abnimmt. Beim Einschrauben des Rohrstutzens in das durch ein Formwerkzeug der Innenkontur der Außenbuchse angepaßte Wellrohrende wird das Wellrohr zwischen dem Rohrstutzen und der Stützbuchse abgedichtet.

Aus der DE-OS 40 27 818 ist eine Anschlußarmatur für schraubenlinienförmig gewellte Metallrohre bekannt, die eine auf das Wellrohrende aufgeschraubte Außenbuchse mit einem das Wellrohrende überragenden Glattrohransatz aufweist. Der Glattrohransatz besitzt ein Innengewinde, in welches ein Anschlußrohrstück eingeschraubt wird. Das Anschlußrohrstück dringt mit einem abgestuften Ende in das Wellrohr ein. Beim Einschrauben des Anschlußrohrstücks wird die Wellung des Wellrohres am Ende gestaucht. Die Abdichtung erfolgt durch eine in die letzten Wellengänge eingelegte Dichtungsschnur aus Graphit, die beim Stauchen der Wellung verformt und gegen die Innenwandung der Außenbuchse und das in das Wellrohrende eingedrungene abgestufte Ende des Rohrstutzens gepreßt wird.

Aus der DE-A-3 341 297 ist eine Dichtpackung zum Abdichten von Wellrohren bekannt, die aus zwei auf dem Wellrohr angeordneten gegeneinander bewegbaren und ineinander fassenden Buchsen besteht, zwischen welchen ein das Wellrohr umfassender Ringraum zur Aufnahme einer Dichtmasse gebildet wird. Es ist eine sich von innen an den Dichtbereich anlegende Wellrohrhülse vorgesehen. Als Dichtmasse wird Graphit vorgeschlagen.

Aus der EP 0 775 865 B2 ist eine Anordnung zum Verbinden des Endes eines Wellrohres mit einem Anschlußstück bekannt, bei welcher in das Ende des Wellrohres ein Stützring eingeschraubt, dessen Ende aus dem Wellrohr herausragt. Auf das Ende des Wellrohres ist ein Druckring soweit aufgeschraubt, daß das Ende des Wellrohres hinausragt. Das Anschlußstück bildet mit dem Druckring eine Dichtkammer, in welcher ein Dichtring aus Graphit angeordnet ist, welcher durch axiales Gegenziehen von Druckring und Anschlußstück komprimiert ist.

Der vorliegenden Erfindung liegt die Aufgabe zugrunde, eine Verbindung für schraubenlinienförmig gewellte Metallrohre mit einem Anschlußteil bereitzustellen, die aus einfachen Bauteilen besteht und ohne Spezialwerkzeuge montierbar ist. Insbesondere soll der Kraftaufwand bei der Montage verringert werden.

Diese Aufgabe wird durch die im Anspruch 1 erfaßten Merkmale gelöst.

Der Vorteil besteht insbesondere darin, daß durch die Anordnung des Dichtrings an der Innenseite des Wellrohres die Verpreßkräfte bei gleicher Flächenpressung erheblich kleiner ausfallen als bei einer Anordnung des Dichtrings an der äußeren Oberfläche des Wellrohres.

Ein weiterer Vorteil besteht darin, daß die Größe des Dichtrings geringer und damit der Kostenaufwand für den Dichtring niedriger ist. Die Anordnung des Dichtrings an der Innenwand des Wellrohres führt noch dazu, daß die gesamte Verbindung wesentlich kompakter ist als die bekannte Verbindung.

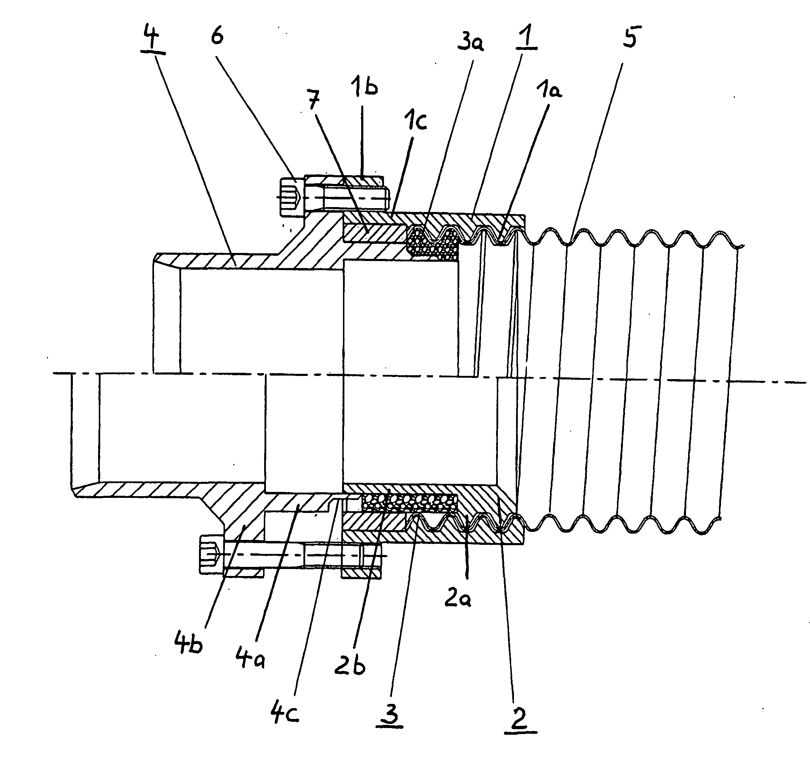

Die Erfindung ist anhand des in der Figur schematisch dargestellten Ausführungsbeispiels näher erläutert.

In der Figur zeigt die untere Hälfte den Zustand vor dem Verpressen und die obere Hälfte den fertigen Zustand.

Zunächst wird ein Stützring 2 mit seinem Grobgewinde 2a in das glattgesägte Ende des Wellrohres 5 soweit eingeschraubt, daß ein Teil des glattwandigen Bereichs 2b aus dem Ende des Wellrohres 5 herausragt. Auf den glattwandigen Bereich 2b wird ein Dichtring 3 aus Graphit aufgeschoben, der etwas kürzer ist als die Länge des glattwandigen Bereiches 2b.

Auf das Wellrohr 5 wird ein Druckring 1 mittels seines Grobgewindes 1a soweit aufgeschraubt, daß der letzte Gewindegang mit dem Ende des Wellrohres 5 abschließt und ein glattwandiger Bereich 1c das Wellrohrende überragt.

Über den Dichtring 3 wird ein metallisches Rohrstück 7 gelegt.

Das Anschlußstück 4 weist einen Ansatz 4a auf, der in den Ringspalt zwischen dem Wellrohr 5 und dem glattwandigen Bereich 2b eingeschoben wird.

Mittels der Spannbolzen 6, welche durch nicht näher bezeichnete Bohrungen im Flansch 4b des Anschlußstücks 4 und im Flansch 1b des Druckringes 1 hindurchgeführt sind, werden die Flansche 4b und 1b einander angenähert. Die Bohrungen im Flansch 1b weisen zu diesem Zweck ein Gewinde auf.

Während des Anziehens der Schraubbolzen 6 wird der Dichtring 3 umgeformt und verpreßt. Bei dieser axialen und radialen Verformung legt er sich fest an die Wandungen der durch den Stützring 2, das Wellrohr 5, das Rohrstück 7 sowie das Anschlußstück 4 gebildete Kammer an. Das Material des Dichtrings 3 ist Graphit. Durch die Verpressung des Dichtrings 3 wird der Graphit um 10 - 35 % verdichtet, d. h. das Ausgangsvolumen des Dichtungsrings 3 reduziert sich um den genannten Betrag.

Durch die besondere Ausgestaltung des in das Wellrohr 5 eindringenden Ansatzes 4a an seinem freien Ende 4c wird die radiale Umformung und Verpressung unterstützt.

Die erfindungsgemäße Verbindung kann ohne besondere Werkzeuge an der Baustelle am verlegten Wellrohr ohne großen Kraftaufwand hergestellt werden, wobei eine hohe Sicherheit gegen Undichtwerden gewährleistet ist.

## Patentansprüche

1. Verfahren zur Herstellung einer Verbindung zwischen dem Ende eines schraubenlinienförmig gewellten Metallrohresn (5) und einem Anschlußstück (4) , bei dem
a) in das Ende des schraubenlinienförmig gewellten Metallrohres (5) ein Stützring (2) mit einem der Wellung des Metallrohres (5) angepaßten Grobgewinde (2a), welches sich über einen Bereich seiner äußeren Oberfläche erstreckt, soweit eingeschraubt wird, daß ein glattwandiger Bereich (2b) mit einem geringeren Außendurchmesser als die lichte Weite des Metallrohres sowohl innerhalb des Metallrohres (5) verbleibt als auch das Ende des Metallrohres (5) überragt,
b) ein Druckring (1) mit einem der Wellung des Metallrohres (5) angepaßten Grobgewinde (1a) auf das Ende des Metallrohres (5) so aufgeschraubt wird, daß ein mit einem Flansch (1b) versehener glattwandiger Bereich (1c) des Druckrings (1) das Ende des Metallrohres überragt,
c) in das Ende des Metallrohres ein Dichtring (3) aus Graphit eingeschoben wird, der sich auf dem glattwandigen Bereich (2b) des Stützrings (2) abstützt,
d) zwischen dem Anschlußstück (4,4a) und dem glattwandigen Bereich (1c) des Druckrings (1) ein Rohrstück (7) angeordnet wird,
e) das Anschlußstück (4) mit einen Ansatz (4a), dessen Querschnittsfläche der Querschnittsfläche zwischen dem glattwandigen Bereich (2b) des Stützrings (2) und dem Rohrstück (7) entspricht, in den Raum zwischen dem glattwandigen Bereich (2b) und dem Rohrstück (7) eingeführt und
f) der Dichtring (3) **dadurch** axial und radial umgeformt und verpreßt wird, daß durch Bohrungen im Flansch (1 b) des Druckrings (1) und einem Flansch (4b) des Anschlußstücks (4) hindurchgeführte Schraubbolzen ein Annähern der Flansche (1 b,4b) bewirken.

2. Verfahren nach Anspruch 1, **dadurch gekennzeichnet, daß** der Dichtring (3) in zumindest eine Wellung des Metallrohres (5) eingepreßt wird.

3. Verfahren nach Anspruch 1 oder 2, **dadurch gekennzeichnet, daß** das Volumen des Dichtrings (3) um 10 - 35 % verringert wird.

## Claims

1. Method of creating a connection between the end of a helically corrugated metal pipe (5) and a connecting piece (4) in which
a) a support ring (2) with a large thread (2a) extending over a section of its outer surface and adapted to the corrugation of a metal pipe (5) is screwed into the end of the helically-corrugated metal pipe (5) until a smooth-wall section (2b) with a smaller outer diameter than the inside width of the metal pipe remains in the metal pipe (5) and extends beyond the end of the metal pipe (5),
b) a clamping ring (1) with a large thread (1a) adapted to the corrugation of the metal pipe (5) is screwed onto the end of the metal pipe (5) until a smooth-wall section (1c) of the clamping ring (1) providing the flange (1b) extends beyond the end of metal pipe, and
c) a sealing ring (3) of graphite is shoved into the end of the metal pipe, and the sealing ring abuts the smooth-wall section (2b) of the support ring (2),
d) a pipe section (7) is between the connecting piece (4, 4a) and the smooth-wall section (1c) of the clamping ring (1),
e) the connecting piece (4) with an extension (4a) whose cross-sectional area corresponds to the cross-sectional area between the smooth-wall section (2b) of the support ring (2) and the pipe section (7) is inserted into the area between the smooth-wall section (2b) and the pipe section (7), and
f) the sealing ring (3) is axially and radially deformed and compressed so that threaded bolts extending through holes in the flange (1b) of the clamping ring (1) and a flange (4b) of the connecting piece (4) cause the flanges (1b, 4b) to draw toward each other.

2. Method according to claim 1, **characterized in that** the sealing ring (3) is pressed into at least one corrugation of the metal pipe (5).

3. Method according to claim 1 or 2, **characterized in that** the volume of the sealing ring (3) is reduced by 10-35%.

## Revendications

1. Procédé permettant la réalisation d'une liaison entre l'extrémité d'un tube à ondulation hélicoïdale (5) et une pièce de raccordement, selon lequel
a) une bague d'appui (2) est vissée dans l'extrémité du tube métallique à ondulation hélicoïdale (5) avec un filetage à pas grossier (2a) adapté à l'ondulation du tube métallique (5) et qui s'étend sur une zone de sa surface extérieure, de telle sorte qu'une zone lisse (2b) d'un diamètre plus petit que la dimension intérieure du tube métallique (5) se prolonge tant à l'intérieur du tube métallique (5) qu'au-delà de l'extrémité du tube métallique (5),
b) une bague d'appui (1) est vissée sur l'extrémité du tube métallique (5) au moyen d'un filetage à pas grossier adapté à l'ondulation du tube métallique (5) de telle sorte qu'une zone lisse (1c) de la bague d'appui (1) munie d'une bride (1b) dépasse de l'extrémité du tube métallique,
c) une bague d'étanchéité (3) en graphite qui s'appuie sur la zone lisse (2b) de la bague d'appui (2) est glissée dans l'extrémité du tube métallique,
d) une pièce de tube (7) est disposée entre la pièce de raccordement (4, 4a) et la zone lisse (1c) de la bague d'appui (1),
e) la pièce de raccordement (4) est introduite dans l'espace situé entre la zone lisse (2b) et la pièce de tube (7) avec un épaulement (4a) dont l'aire de la section correspond à l'aire de la section entre la zone lisse (2b) de la bague d'appui (2) et la pièce de tube (7) et
f) la bague d'appui (3) est déformée et comprimée axialement et radialement par le fait que des boulons filetés introduits à travers les perçages de la bride (1b) de la bague d'appui (1) et d'une bride (4a) de la pièce de raccordement (4) provoquent un rapprochement des brides (1b, 4b).

2. Procédé selon la revendication 1, **caractérisé par le fait que** la bague d'étanchéité (3) est pressée dans au moins une ondulation du tube métallique (5).

3. Procédé selon la revendication 1 ou 2, **caractérisé par le fait que** le volume de la bague d'étanchéité (3) diminue de 10 à 35%.
